# EUROPEAN PATENT SPECIFICATION

(11) **EP 2 541 060 B1**
(45) Date of publication and mention of the grant of the patent: **18.09.2013**
(21) Application number: 12172864.6
(22) Date of filing: 21.06.2012
(51) Int. Cl.: F04B 1/20, F01B 3/00, F16C 33/46, F16C 33/30

(54) **Timing mechanism for a swashplate bearing**
Timing-Mechanismus für ein Taumelscheibenlager
Procédé de commande de réseau d'antenne et point d'accès l'utilisant

(30) Priority: 30.06.2011 US 201113173552
(43) Date of publication of application: 02.01.2013
(73) Proprietor: CATERPILLAR INC., Peoria IL 61629-6490 (US)
(72) Inventor: Fritz, Wayne, Manhattan, IL Illinois 60442 (US)
(74) Representative: Kramer - Barske - Schmidtchen

(56) References cited:
- WO-A1-86/03547
- DE-A1-102005 036 853

## Description

### Technical Field

The disclosure relates generally to a swashplate bearing and, more particularly, to a timing mechanism for a swashplate bearing.

### Background

A hydraulic tool system often uses one or more variable displacement pumps, for example swashplate-type pumps, to pump fluid through the tool system. The swashplate-type pump includes a plurality of pistons held against a engagement surface of a tiltable swashplate. Joints, such as ball and socket joints, are disposed between the pistons and the engagement surface of the swashplate to allow for relative movement between the swashplate and the pistons. Each piston is slidably disposed to reciprocate within an associated barrel, and the barrels and the associated pistons rotate relative to the tilted engagement surface of the swashplate. During a portion of an operation cycle for each piston, low pressure fluid flows into the barrel and the piston is permitted, by the orientation of the engagement surface, to extend from the associated barrel. During another portion of the operation cycle, the piston is forced back into the barrel by the engagement surface, and the piston pushes the fluid from the barrel at an elevated pressure.

The amount of fluid pushed from each barrel during a single relative rotation between the pistons and the swashplate is directly related to the tilt or pivot angle of the engagement surface of the swashplate. Based on a restriction of the pump and/or a fluid circuit connected to the pump, the amount of fluid pushed from the barrel during each rotation is directly related to the flow rate and pressure of fluid exiting the pump. A higher tilt angle equates to a greater flow rate, while a lower tilt angle results in a lower flow rate. Similarly, a higher tilt angle requires more power from a driving source to produce the higher flow rates than does a lower tilt angle. As such, when the demand for fluid is low, the swashplate angle is typically reduced to lower the power consumption of the pump.

In general, the swashplate is supported at one end of a housing of the variable displacement pump by a pair of arcuate roller bearings. Each bearing is disposed between the swashplate and the housing, and includes a bearing cage holding a number of individual rollers. Links are used for initial positioning and follow up movement of the bearing cage and rollers relative to the swashplate. Repeated tilting or pivoting of the swashplate without the links may lead to slipping of the rollers to positions other than the desired optimum support position. By using the links, this slipping may be prevented, and the bearing cage, rollers, and swashplate typically move together.

An exemplary mechanism for connecting a bearing cage of a swashplate-type pump to a corresponding swashplate and pump housing is disclosed in U.S. Patent No. 5,390,584 of Fritz et al. that issued on February 21, 1995 (the '584 patent). Specifically, the mechanism of the '584 patent includes a flexural elastic link pivotally connected to a bearing cage and having first and second ends slidably disposed within a first bore in a pump housing and a second bore in a swashplate, respectively. The bores are in axial alignment with each other when the swashplate is in the centered position.

Although the mechanism of the '584 patent may adequately connect the bearing cage of a pump to a corresponding swashplate and housing, it may be less than optimal. In particular, assembly of the mechanism may be difficult as the elastic link may not remain adequately coupled to the bearing cage during assembly of the pump.

DE 10 2005 036 853 A1 discloses an axial piston machine with an elongated guiding element for a bearing cage, wherein a pivot pin is rotatably mounted to the bearing cage, such that the guiding element may pass through the pitvot pin.

WO 86/03547 A discloses a unitary cage assembly annularly positioning a plurality of rollers in a pair of roller bearings supporting a cradle swashplate. By utilizing the unitary cage assembly, a parallel relationship between the rollers is assured and, furthermore, only a single locating mechanism for the unitary cage assembly is required.

The disclosed timing mechanism is directed to overcoming one or more of the problems set forth above and/or other problems of the prior art.

### Summary

The disclosure describes a timing mechanism for a variable displacement pump that may include a swashplate and a housing. The timing mechanism may include a timing link and a bearing cage. The timing link may include first and second ends connected to a middle portion. The first end may be configured to be disposed in an opening of the swashplate, and the second end may be configured to be disposed in an opening in the housing. The bearing cage may be configured to be disposed between the swashplate and the housing. The bearing cage may define a completely closed slot in which the middle portion of the timing link is disposed. The completely closed slot may have a constant orientation relative to the bearing cage and contact the middle portion of the timing link.

The disclosure further describes a variable displacement pump that may include a housing, a swashplate, a first timing link, and a first bearing cage. The housing may define a first housing hole. The swashplate may be disposed within the housing and may define a first swashplate hole. The first bearing may include a first bearing cage that is disposed between the swashplate and the housing. The first bearing cage may define a completely closed slot having a constant orientation relative to the first bearing cage. The first timing link may include a swashplate connector end and a housing connector end each connected to a middle portion. The swashplate connector end may be disposed in the first swashplate hole, while the housing connector end may be disposed in the first housing hole. The middle portion may be disposed in and in contact with the completely closed slot of the first bearing cage.

The disclosure still further describes a method of assembling a timing mechanism configured to be used in a variable displacement pump in which a bearing may be disposed between a swashplate and a housing. The method may include disposing a portion of a timing link, which is configured to be connected to the swashplate and the housing, within a non-rotatable completely closed slot of the bearing. The timing link includes a generally ring-like end configured to be disposed in a hole in the housing.

### Brief Description of the Drawings

Fig. 1 is an isometric view of an exemplary disclosed variable displacement pump;
Fig. 2 is a partial cross-sectional view of the variable displacement pump of Fig. 1;
Fig. 3 is a detail cross-sectional view taken along line 3-3 of Figure 2; and
Fig. 4 is an isometric view of a portion of a timing mechanisms that may be used with the pump of Figs. 2 and 3.

### Detailed Description

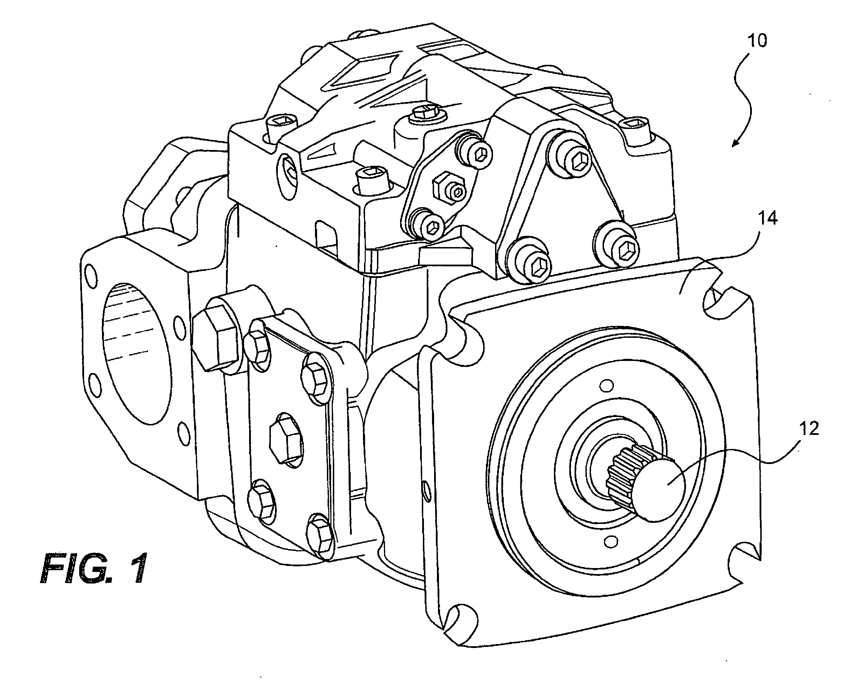

Fig. 1 shows a pump 10. In one embodiment, pump 10 may be driven by an external source of power (not shown), such as a combustion engine, via a shaft 12. As such, shaft 12 may extend from one end of a housing 14 for engagement with the engine.

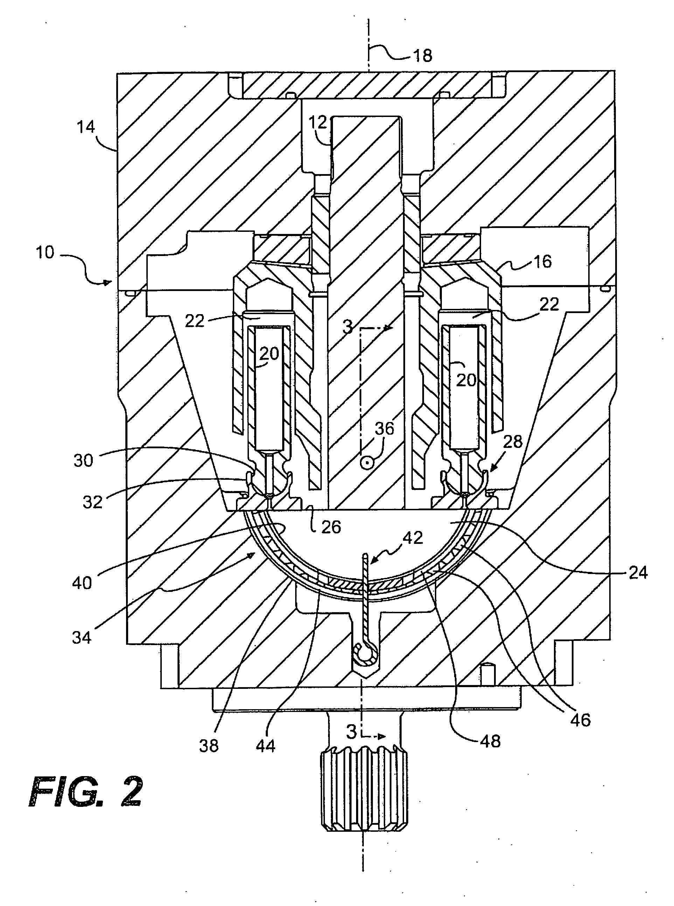

As illustrated in Fig. 2, the housing 14 may enclose the pump 10. The pump 10 may include a rotatable barrel 16 secured to the shaft 12, which may rotate around a central axis 18. The pump 10 may also include a plurality of pistons or pistons 20, one piston 20 slidingly disposed within a corresponding cylinder bore 22 formed in the barrel 16. Each bore 22 and each associated piston 20 may, together, at least partially define a pumping chamber. It is contemplated that any number of pumping chambers may be included in the pump 10 and symmetrically and radially disposed about the central axis 18. In the embodiment of Fig. 2, the central axis 18 may be coaxial with the shaft 12. However, it is contemplated that the central axis 18 may be at an angle relative to the shaft 12 such as in a bent-axis type pump.

The barrel 16 may be connected to rotate with the shaft 12. That is, as the shaft 12 is rotated by the engine, the barrel 16 and the pistons 20 located within the bores 22 that are formed in the barrel 16 may all rotate together about the central axis 18.

The pump 10 may be a swashplate-type pump. Specifically, the pump 10 may include a swashplate 24 having an engagement surface 26. The engagement surface 26 may be operatively engaged with each of the pistons 20 by way of a joint 28, such as a ball and socket joint. That is, each piston 20 may have a generally spherical end 30, which is in engagement with a cup-like socket 32. The sockets 32 may be configured to slide along the engagement surface 26 as the swashplate 24 pivots within a roller bearing 34.

The swashplate 24 may be tilted to vary a displacement of the pistons 20 within the bores 22 as swashplate 24 pivots within the bearing 34 about a tilt axis 36. In one embodiment, the tilt axis 36 may pass through and be generally perpendicular to the central axis 18. As the swashplate 24 pivots about the tilt axis 36, the pistons 20 located on one-half of the engagement surface 26 (relative to the tilt axis 36) may be pushed into their associated bores 22, while the pistons 20 located on an opposing half of the engagement surface 26 may extend out of their associated bores 22 by the same amount. As the pistons 20 rotate about the central axis 18, the pistons 20 may annularly move from the retracted side of the engagement surface 26 to the extended side, and repeat this cycle as the shaft 12 rotates.

As the pistons 20 extend out of the bores 22, low pressure fluid may be drawn into the bores 22. Conversely, as the pistons 20 are pushed into the bores 22, the fluid may be forced from the bores 22 at an elevated pressure. An amount of movement between the retracted position and the extended position may relate to a flow rate of fluid displaced by the pistons 20 during a single rotation of the shaft 12. Because of the connection between the pistons 20 and the engagement surface 26, the tilt angle (angle relative to a perpendicular of the central axis 18 that results in positive displacement of the pistons 20) of the engagement surface 26 may affect the movement between the retracted position and the extended position. One or more pressure relief valves (not shown) located within the pump 10 or within a hydraulic circuit (not shown) supplied with fluid from the pump 10 may affect the pressure of the fluid forced from the bores 22.

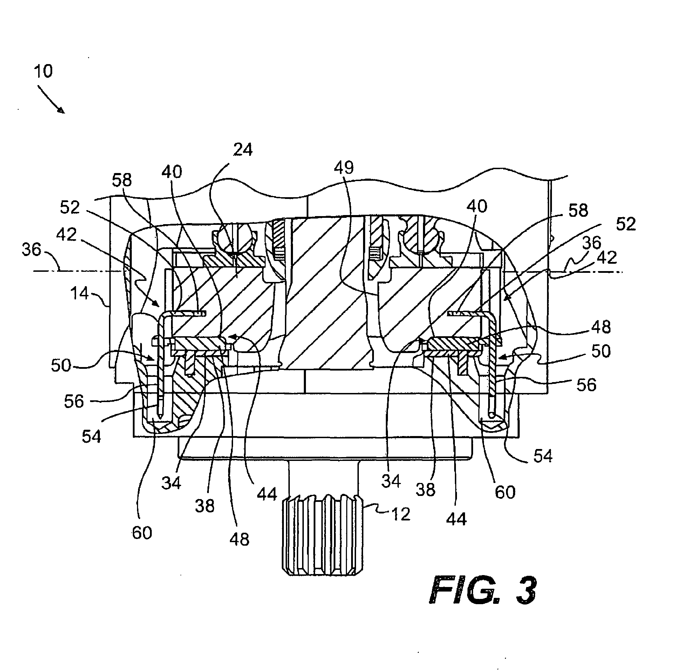

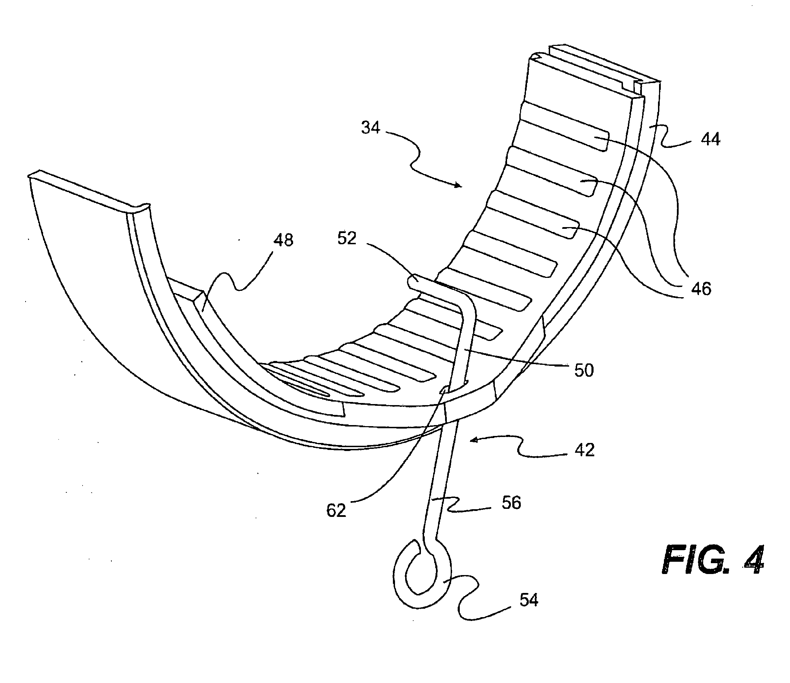

The swashplate 24 may be supported within the housing 14 by a pair of roller bearings 34, although only one bearing 34 is shown in Fig. 2 because of the orientation of the view. Specifically, each roller bearing 34, which may be generally arcuate in shape, may be disposed between a generally arcuate concave surface 38 formed or otherwise provided in the housing 14, and a generally arcuate convex surface 40 formed or otherwise provided on the swashplate 24. Each roller bearing 34 may be connected to the swashplate 24 and the housing 14 by a timing mechanism 42, as discussed in further detail below in conjunction with Figs. 3 and 4.

The roller bearing 34 may include a bearing race 44, a plurality of rollable elements such as rollers 46, and a bearing cage 48, each discussed in further detail below. Although the drawings show the bearing 34 including the bearing race 44, it is to be understood that the bearing race 44 may be omitted from the bearing 34, as also described below.

The bearing race 44 of the bearing 34 may be disposed in the concave surface 38 of the housing 14. The bearing race 44 may be disposed so as to remain stationary relative to the housing 14 and other components of the bearing 34. The bearing race 44 may have a generally arcuate shape, corresponding to the arcuate shape of the surface 38 or the bearing cage 48. The bearing race 44 may be manufactured from a metal or a polymer material. As stated above, however, the bearing race 44 may be entirely omitted from the bearing 34. When this is the case, the surface 38 of the housing 14 may act as a bearing race, permitting the bearing 34 to move relative to and directly on the surface 38.

The rollers 46 may be disposed in the bearing 34. Although Fig. 2 shows the use of fifteen rollers 46 in the bearing 34, it is to be understood that more or less rollers 46 may be used in the bearing 34. The rollers 46 may be manufactured from a metal or polymer material. The rollers 46 may permit smooth movement of the bearing 34 relative to the bearing race 44 (when used) or relative to the surface 38 of the housing 14.

The bearing cage 48 may hold the rollers 46 and maintain arcuate spacing between and among the rollers 46. When the bearing race 44 is used, the bearing cage 48 may hold the rollers 46 in direct contact with the bearing race 44. Conversely, when the bearing race 44 is omitted, the bearing cage 48 may hold the rollers 46 in direct contact with the concave surface 38 of the housing 14. The bearing cage 48 may also contact the surface 40 of the swashplate 24. The bearing cage 48 may have a generally arcuate shape, such as a shape corresponding to the arcuate shape of the surface 40 and/or the arcuate shape of the bearing race 44. The bearing cage 48 may be configured to move with the swashplate 24, relative to the bearing race 44, as described in further detail below.

Fig. 3 illustrates the above-discussed features shown in Fig. 2, and also shows a central opening 49 provided in the swashplate 24 to permit the shaft 12 to be disposed therethrough. Fig. 3 further illustrates the use of two timing mechanisms 42. The two timing mechanisms 42 may connect to the bearings 34, the swashplate 24, and the housing 14. Specifically, one timing mechanism 42 may be used to connect each of the bearings 34 to both the swashplate 24 and the housing 14. It is to be understood, however, that multiple timing mechanisms 42 may be used to connect to either or both of the bearings 34. For example, two timing mechanisms may be used to connect to each of the bearings 34. Or, a single timing mechanism 42 may be used to connect to one of the bearings 34, while more than one of the timing mechanisms 42 may be used to connect to the other one of the bearings 34. Thus, the disclosure is not limited to the use of a particular number of timing mechanisms 42, nor does the disclosure require that the timing mechanisms 42 be used with both of the bearings 34.

In the embodiment shown in Fig. 3, one timing mechanism 42 is positioned on each side of the swashplate 24. Each timing mechanism 42 may include a timing link 50 having a body including a first connector end 52 and a second connector end 54, both of which are connected to a middle portion 56. The timing link 50 may be formed from a metal, such as a stainless or corrosion-resistant steel, or a polymer material. When the timing link 50 is made from metal, the timing link 50 may be fabricated by bending a relatively thin wire to form the first and second connector ends 52 and 54. The middle portion 56, the first connector end 52, and/or the second connector end 54 may have a generally circular, elliptical, or polygonal cross-section.

The middle portion 56 of the timing link 50 may be generally straight along a length thereof, and the first connector end 52 may also be generally straight along a length thereof and may be disposed at an angle relative to the middle portion 56. The angle may be about 90 degrees. The first connector end 52 may be configured to be disposed within a corresponding hole or opening 58, which may be a blind hole (i.e., a hole that extends to a specified depth without breaking through to the other side), in the swashplate 24. Specifically, the hole 58 may be formed in the generally cylindrical end face of the swashplate 24 that is orthogonal to the engagement surface 26. By this arrangement, the timing mechanism 42 may be connected to the swashplate 24.

The second connector end 54 of the timing link 50 may have a generally ring-like shape. The generally ring-like shape may encompass a circumference of, for example, about 330 degrees. The second connector end 54 may be disposed within a corresponding hole or opening 60, which may be a blind hole (i.e., a hole that extends to a specified depth without breaking through to the other side), in the housing 14. The hole 60 may have a circular cross section, or may be a slot, of sufficient size to permit the second connector end 54 to be inserted therein, while permitting the second connector end 54 to rotate and translate as described in detail below. Further, the hole 60 may be sized so as to permit an outer circumference of the second connector end 54 to contact both sides of the hole 60, as also discussed below. By this arrangement, the timing mechanism 42 may be connected to the housing 14.

The timing link 50 may also connect to the bearing 34. In particular, Fig. 4 shows the timing mechanism 42 in which the timing link 50 may pass through a slot 62 formed in the bearing cage 48 of the bearing 34, for example in a protrusion of the bearing cage 48. The bearing-cage protrusion may be formed generally at a midpoint of the bearing cage 48, in an axial extrusion that extends generally perpendicular to the arcuately shaped surfaces of the bearing cage 48. The slot 62 may be configured to receive and retain therein the middle portion 56 of the timing link 50. The slot 62 may be fully radiused in the interior thereof, such that a semicircular surface contacts one or both sides of the middle portion 56 of the timing link 50, to thereby facilitate sliding and/or rotation of the timing link 50 relative to the bearing 34 during pivoting of the swashplate 24. The slot 62 is a completely closed slot, such that the slot 62 is fully surrounded, in at least one plane, by the structure of the bearing cage 48.

As a result of the above-discussed connections, pivoting of the swashplate (not shown in Fig. 4) on the tilting axis may result in a corresponding rotational movement of the bearing 34, while movement of the bearing 34 relative to the swashplate may be controlled. During the pivoting of the swashplate and the corresponding rotational movement of the bearing 34, the components may move as follows: the first connector end 52 of the timing link 50 may rotate relative to the hole in the swashplate; the middle portion 56 of the timing link 50 may rotate and translate within the slot 62; and the second connector end 54 of the timing link 50 may rotate and translate within and relative to the hole in the housing (not shown in Fig. 4).

Because the slot 62 may be formed in the bearing cage 48, the slot 62 may maintain a constant orientation relative to the bearing cage 48 and other components of the bearing 34. Thus, the slot 62 in which the timing link 50 is disposed may not rotate relative to the bearing cage 48 or other components of the bearing 34. Instead, the timing link 50 may be permitted to rotate relative to and within the slot 62.

### Industrial Applicability

The disclosed timing mechanism finds potential application in any fluid system where responsiveness and performance customization is desirable. The disclosed timing mechanism finds particular applicability in hydraulic tool systems, especially hydraulic tool systems for use onboard mobile machines. One skilled in the art will recognize, however, that the disclosed timing mechanism could be utilized in other fluid systems that may or may not be associated with hydraulically operated tools. For example, the disclosed timing mechanism could be utilized in relation to an engine lubrication, cooling, or fueling system.

Referring to Fig. 2, when the shaft 12 is rotated, the barrel 16 and the pistons 20 disposed within the bores 22 of the barrel 16 may also rotate. As the pistons 20 rotate about the central axis 18, the spherical ends 30 thereof riding along the engagement surface 26 of the swashplate 24 may cause the pistons 20 to cyclically rise and fall in the axial direction of the shaft 12 (i.e., to extend into and retract from the bores 22). This reciprocating motion may function to draw fluid into the pumping chamber defined by the piston 20 and the bore 22, and subsequently to push the fluid from the pumping chamber at an elevated pressure.

During operation of the pump 10, the flow rate of the fluid exiting the barrel 16 may be varied to meet demands of the associated circuit (not shown). To increase the flow rate of the discharged fluid, the tilt angle of engagement surface 26 may be increased. Conversely, to decrease the flow rate of the discharged fluid, the tilt angle may be reduced.

As shown and described, the use of the timing mechanisms 42 may permit the roller bearings 34 to rotationally move with the swashplate 24, when the swashplate 24 is tilted on the tilt axis 36, while controlling movement of the bearings 34 relative to the swashplate 24. If the bearings 34 were not connected to the swashplate 24, pivoting of the swashplate 24 back and forth may eventually result in the bearings 34 moving to undesired locations relative to the swashplate 24, which would prevent the bearings 34 from effectively supporting the swashplate 24 and providing smooth pivoting of the swashplate 24. The use of the timing mechanisms 42, which connect the bearings 34 to the swashplate 24 and the housing 14, may prevent the bearings 34 from moving to these undesired locations.

As discussed above, the timing mechanisms 42 may each include the first connector ends 52 of the timing links 50 disposed in the holes 58 of the swashplate 24, so that the timing links 50 may pivot relative to the swashplate 24. Thus, connection of the timing links 50 and the swashplate 24 may be quickly and easily accomplished, so that the bearings 34, which also may be connected to the timing links 50, may be effectively coupled for rotational movement with the swashplate 24. Further, these connections may be accomplished without the use of any separate or additional components such as inserts or pins.

The second connector ends 54 of the timing links 50 may be disposed in the holes 60 of the housing 14, the holes 60 sized, shaped, and otherwise disposed in the housing 14 so as to permit the second connector ends 54 of the timing links 50 to pivot relative to the hole 60, as well as to translate or slide up and down along an axis of the hole 60 during pivoting of the swashplate 24 (i.e., one or both sides of an outer circumference of the ring-like shape of the second connector end 54 may rotate against a wall of the hole 60, and one or both sides of the outer circumference of the ring-like shape of the second connector end 54 may slide against the wall of the hole 60). By this arrangement, connection of the timing links 50 and the housing 14 may be quickly and easily accomplished, and the timing links 50 may provide smooth rotational movement of the bearings 34 when the swashplate 24 is pivoted. Further, these connections may be accomplished without the use of any separate or additional components such as inserts or pins.

The middle portions 56 of the timing links 50 may be disposed in the slots 62 of the bearings 34 which are sized, shaped, and otherwise disposed so as to permit the timing links 50 to pivot relative to the bearings 34, as well as to translate or slide up and down during pivoting of the swashplate 24. The slots 62 may maintain a constant orientation (i.e., may not rotate) relative to the bearings 34 or the bearing cages 48. As a result, connection of the timing links 50 to the bearings 34 may be quickly and easily accomplished, and the timing links 50 may be securely retained in the bearings 34. Further, these connections may be accomplished without the use of any separate or additional components, such as inserts or pins, and may provide a more robust assembly. In accordance with the above description, the timing mechanisms 42 of the disclosure may include relatively few component parts compared to other systems.

An exemplary method of assembling the variable displacement pump including the timing mechanisms 42 is now described. The rollers 46 may be placed in the two bearing cages 48, and the bearing cages 48 including the rollers 46 may be placed in the two bearing races 44, if used. The timing links 50 may be connected to the bearings 34, by placing the middle portions 56 of the timing links 50 in the slots 62 of the bearings 34. Then the swashplate 24 may be placed such that the convex surfaces 40 contact the bearings 34. Then, the first connector ends 52 of the timing links 50 may be disposed in the holes 58 of the swashplate 24.

At this point, the bearings 34 and swashplate 24 connected by the timing links 50 may be disposed in the housing 14, such that the bearing races 44 are disposed in the concave surface 38 of the housing 14. In the event the bearing races 44 are omitted from the bearings 34, the bearing cages 48 may be disposed in the concave surface 38 of the housing 14. Simultaneously or thereafter, the second connector ends 54 of the timing links 50 may be disposed in the holes 60 of the housing 14.

The pump 10 is then placed in the housing 14. The pump 10 includes the pistons 20 disposed in the respective bores 22 formed in the barrel 16. The pump 10 is placed such that the joints 28, which include the spherical ends 30 disposed in the sockets 32, contact the engagement surface 26 of the swashplate, and such that the shaft 12 is disposed in the central opening 49 of the swashplate. Thus, assembly of the variable displacement pump that includes the timing mechanisms 42 may be more easily accomplished as compared to other systems used to control movement of bearings relative to a swashplate.

It will be apparent to those skilled in the art that various modifications can be made to the disclosed timing mechanism, based on consideration of the specification and practice of the timing mechanism disclosed herein. It is intended that the specification and examples be considered as exemplary only, with a fuller scope of the disclosure being indicated by the following claims and their equivalents.

## Claims

1. A timing mechanism (42) for a variable displacement pump (10) that includes a swashplate (24) and a housing (14), comprising:
a timing link (50) including first and second ends (52, 54) connected to a middle portion (56), the first end (52) configured to be disposed in an opening (58) of the swashplate (24), and the second end (54) configured to be disposed in an opening (60) in the housing (14); and
a bearing cage (48) configured to be disposed between the swashplate (24) and the housing (14), **characterised by** the bearing cage (48) defining a completely closed slot (62) in which the middle portion (56) of the timing link (50) is disposed, the completely closed slot (62) having a constant orientation relative to the bearing cage (48) and contacting the middle portion (56) of the timing link (50).

2. The timing mechanism (42) of claim 1, wherein the second end (54) of the timing link (50) is configured to rotate and translate within the opening (60) of the housing (14).

3. The timing mechanism (42) of claim 1, wherein the second end (54) of the timing link (50) has a generally ring-like shape, and an outer circumference of the second end (54) is configured to rotate against a wall of the opening (60) of the housing (14).

4. The timing mechanism (42) of claim 3, wherein the outer circumference of the second end (54) of the timing link (50) is configured to slide against the wall of the opening (60) of the housing (14).

5. The timing mechanism (42) of claim 4, wherein the first end (52) of the timing link (50) is configured to rotate relative to the swashplate (24) without translating relative to the swashplate (24).

6. The timing mechanism (42) of claim 5, wherein the first end (52) of the timing link (50) is disposed at an angle relative to the middle portion (56) of the timing link (50).

7. The timing mechanism (42) of claim 6, wherein the angle between the first end (52) and the middle portion (56) of the timing link (50) is about 90 degrees, and wherein the generally ring-link shape of the second end (54) of the connector encompasses a circumference of about 330 degrees.

8. A method of assembling a timing mechanism (42) configured to be used in a variable displacement pump (10) in which a bearing (34) is disposed between a swashplate (24) and a housing (14), the method comprising:
disposing a portion of a timing link (50), which is configured to be connected to the swashplate (24) and the housing (14), within a non-rotatable completely closed slot (62) of the bearing (34), the timing link (50) including a generally ring-like end configured to be disposed in a hole (60) in the housing (14).

9. The method of claim 8, further comprising:
disposin a first end (52) of the timing link (50) in a blind hole (58) formed in the swashplate (24); and
disposing the generally ring-like end of the timing link (50) in a blind hole (60) formed in the housing (14).

10. The method of claim 9, further comprising:
placing the bearing (34), which includes the timing link (50) disposed in the completely closed slot (62), in contact with the housing (14);
disposing the generally ring-like end of the timing link (50) in a blind hole (60) formed in the housing (14);
placing the swashplate (24) in the housing (14) in contact with the bearing (34); and
disposing a first end (52) of the timing link (50) in a blind hole (58) formed in the swashplate (24).

## Patentansprüche

1. Ansteuerungsmechanismus (42) für eine Pumpe (10) mit variabler Verdrängung, die eine Taumelscheibe (24) und ein Gehäuse (14) aufweist, mit:
einem Ansteuerungselement (50), das mit einem Mittelbereich (56) verbundene erste und zweite Enden (52, 54) aufweist, wobei das erste Ende (52) dazu ausgebildet ist, in einer Öffnung (58) der Taumelscheibe (24) angeordnet zu sein, und das zweite Ende (54) dazu ausgebildet ist, in einer Öffnung (60) im Gehäuse (14) angeordnet zu sein, und
einem Lagerkäfig (48), der dazu ausgebildet ist, zwischen der Taumelscheibe (24) und dem Gehäuse (14) angeordnet zu sein, **dadurch gekennzeichnet, dass** der Lagerkäfig (48) eine komplett geschlossene Ausnehmung (62) definiert, in der der Mittelbereich (56) des Ansteuerungselements (50) angeordnet ist, wobei die komplett geschlossene Ausnehmung (62) relativ zum Lagerkäfig (48) eine konstante Ausrichtung aufweist und den Mittelbereich (56) des Ansteuerungselements (50) berührt.

2. Ansteuerungsmechanismus (42) nach Anspruch 1, wobei das zweite Ende (54) des Ansteuerungselements (50) dazu ausgebildet ist, sich innerhalb der Öffnung (60) des Gehäuses (14) zu drehen und zu verschieben.

3. Ansteuerungsmechanismus (42) nach Anspruch 1, wobei das zweite Ende (54) des Ansteuerungselements (50) eine allgemein ringförmige Gestalt aufweist und ein Außenumfang des zweiten Endes (54) dazu ausgebildet ist, sich gegen eine Wand der Öffnung (60) des Gehäuses (14) zu drehen.

4. Ansteuerungsmechanismus (42) nach Anspruch 3, wobei der Außenumfang des zweiten Endes (54) des Ansteuerungselements (50) dazu ausgebildet ist, gegen die Wand der Öffnung (60) des Gehäuses (14) zu gleiten.

5. Ansteuerungsmechanismus (42) nach Anspruch 4, wobei das erste Ende (52) des Ansteuerungselements (50) dazu ausgebildet ist, sich relativ zur Taumelscheibe (24) zu drehen, ohne sich relativ zur Taumelscheibe (24) zu verschieben.

6. Ansteuerungsmechanismus (42) nach Anspruch 5, wobei das erste Ende (52) des Ansteuerungselements (50) unter einem Winkel relativ zum Mittelbereich (56) des Ansteuerungselements (50) angeordnet ist.

7. Ansteuerungsmechanismus (42) nach Anspruch 6, wobei der Winkel zwischen dem ersten Ende (52) und dem Mittelbereich (56) des Ansteuerungselements (50) ungefähr 90 Grad beträgt und wobei die allgemein ringförmige Gestalt des zweiten Endes (54) des Verbinders einen Umfang von ungefähr 330 Grad umspannt.

8. Verfahren zum Zusammenbauen eines Ansteuerungsmechanismus (42), der dazu ausgebildet ist, in einer Pumpe (10) mit variabler Verdrängung verwendet zu werden, in der ein Lager (34) zwischen einer Taumelscheibe (24) und einem Gehäuse (14) angeordnet ist, wobei das Verfahren aufweist:
Anordnen eines Bereichs eines Ansteuerungselements (50), das dazu ausgebildet ist, mit der Taumelscheibe (24) und dem Gehäuse (14) verbunden zu sein, innerhalb einer sich nicht drehenden komplett geschlossenen Ausnehmung (62) des Gehäuses (34), wobei das Ansteuerungselement (50) ein allgemein ringförmiges Ende aufweist, das dazu ausgebildet ist, in einem Loch (60) im Gehäuse (14) angeordnet zu sein.

9. Verfahren nach Anspruch 8, ferner mit:
Anordnen eines ersten Endes (52) des Ansteuerungselements (50) in einem in der Taumelscheibe (24) gebildeten Sackloch (58) und
Anordnen des allgemein ringförmigen Endes des Ansteuerungselements (50) in einem in dem Gehäuse (14) gebildeten Sackloch(60).

10. Verfahren nach Anspruch 9, ferner mit:
Platzieren des Lagers (34), das das in der Ausnehmung (62) angeordnete Ansteuerungselement (50) aufweist, anliegend an dem Gehäuse (14),
Anordnen des allgemein ringförmigen Endes des Ansteuerungselements (50) in einem in dem Gehäuse (14) gebildeten Sackloch (60),
Platzieren der Taumelscheibe (24) im Gehäuse (14) anliegend an dem Lager (34), und
Anordnen eines ersten Endes (52) des Ansteuerungselements (50) in einem in der Taumelscheibe (24) gebildeten Sackloch (58).

## Revendications

1. Mécanisme de synchronisation (42) pour pompe à cylindrée variable (10) comportant un plateau oscillant (24) et un logement (14), comprenant :
une liaison de synchronisation (50) comportant des première et seconde extrémités (52, 54) reliées à une partie intermédiaire (56), la première extrémité (52) étant configurée de façon à être disposée dans une ouverture (58) du plateau oscillant (24) et la seconde extrémité (54) étant configurée de façon à être disposée dans une ouverture (60) du logement (14) ; et
une cage (48) de palier configurée de façon à être disposée entre le plateau oscillant (24) et le logement (14), **caractérisée en ce que** la cage (48) de palier définit une fente (62) complètement fermée dans laquelle la partie intermédiaire de la liaison de synchronisation (50) est disposée, la fente (62) complètement fermée ayant une orientation constante par rapport à la cage (48) de palier et venant en contact avec la partie intermédiaire (56) de la liaison de synchronisation (50).

2. Mécanisme de synchronisation (42) selon la revendication 1, dans lequel la seconde extrémité (54) de la liaison de synchronisation (50) est configurée de façon à effectuer une rotation et une translation à l'intérieur de l'ouverture (60) du logement (14).

3. Mécanisme de synchronisation (42) selon la revendication 1, dans lequel la seconde extrémité (54) de la liaison de synchronisation (50) a une forme généralement de type annulaire, et une circonférence extérieure de la seconde extrémité (54) est configurée de façon à effectuer une rotation contre une paroi de l'ouverture (60) du logement (14).

4. Mécanisme de synchronisation (42) selon la revendication 3, dans lequel la circonférence extérieure de la seconde extrémité (54) de la liaison de synchronisation (50) est configurée de façon à glisser contre la paroi de l'ouverture (60) du logement (14).

5. Mécanisme de synchronisation (42) selon la revendication 4, dans lequel la première extrémité (52) de la liaison de synchronisation (50) est configurée de façon à effectuer une rotation par rapport au plateau oscillant (24) sans translation par rapport au plateau oscillant (24).

6. Mécanisme de synchronisation (42) selon la revendication 5, dans lequel la première extrémité (52) de la liaison de synchronisation (50) est disposée selon un angle par rapport à la partie intermédiaire (56) de la liaison de synchronisation (50).

7. Mécanisme de synchronisation (42) selon la revendication 6, dans lequel l'angle entre la première extrémité (52) et la partie intermédiaire (56) de la liaison de synchronisation (50) est d'environ 90 degrés, et dans lequel la forme généralement de type annulaire de la seconde extrémité (54) du raccord couvre une circonférence d'environ 330 degrés.

8. Procédé d'assemblage d'un mécanisme de synchronisation (42) configuré de façon à être utilisé dans une pompe à cylindrée variable (10) dans laquelle un palier (34) est disposé entre un plateau oscillant (24) et un logement (14), le procédé comprenant les étapes consistant à :
disposer une partie d'une liaison de synchronisation (50), qui est configurée de façon à être reliée au plateau oscillant (24) et au logement (14), à l'intérieur d'une fente (62) complètement fermée non apte à effectuer une rotation du palier (34), la liaison de synchronisation (50) comportant une extrémité généralement de type annulaire configurée de façon à être disposée dans un trou (60) du logement (14).

9. Procédé selon la revendication 8, comprenant en outre les étapes consistant à:
disposer une première extrémité (52) de la liaison de synchronisation (50) dans un trou borgne (58) formé dans le plateau oscillant (24) ; et
disposer l'extrémité généralement de type annulaire de la liaison de synchronisation (50) dans un trou borgne (60) formé dans le logement (14).

10. Procédé selon la revendication 9, comprenant en outre les étapes consistant à :
placer le palier (34), qui comporte la liaison de synchronisation (50) disposée dans la fente (62) complètement fermée, en contact avec le logement (14) ;
disposer l'extrémité généralement de type annulaire de la liaison de synchronisation (50) dans un trou borgne (60) formé dans le logement (14) ;
placer le plateau oscillant (24) dans le logement (14) en contact avec le palier (34) ; et
disposer une première extrémité (52) de la liaison de synchronisation (50) dans un trou borgne (58) formé dans le plateau oscillant (24).
